# EUROPEAN PATENT SPECIFICATION

(11) **EP 0 213 641 B1**
(45) Date of publication and mention of the grant of the patent: **12.05.1993**
(21) Application number: 86112327.1
(22) Date of filing: 04.09.1986
(51) Int. Cl.: H04J 3/06, H04L 25/14

(54) **Delay time adjusting method, circuit, and system**
Verfahren, System und Schaltung zur Anpassung der Verzögerungszeit
Méthode, circuit et système de réglage du temps de retard

(30) Priority: 04.09.1985 JP 195623/85
(43) Date of publication of application: 11.03.1987
(73) Proprietor: FUJITSU LIMITED, Kawasaki-shi, Kanagawa 211 (JP)
(72) Inventor: Sakata, Takashi, Yokohama-shi Kanagawa 227 (JP); Hanabata, Toshio, Yokohama-shi Kanagawa 227 (JP); Fujimoto, Naonobu, Kawasaki-shi Kanagawa 211 (JP); Murase, Tetsuro, Naka-ku Yokohama-shi Kanagawa 231 (JP); Ikawa, Fumihiro, Yokohama-shi Kanagawa 227 (JP)
(74) Representative: Lehn, Werner, Dipl.-Ing.

(56) References cited:
- US-A- 3 306 978
- PATENT ABSTRACTS OF JAPAN, vol. 7, no. 119 (E-177)[1264], 24th May 1983 & JP-A-58 36 052
- PATENT ABSTRACTS OF JAPAN, vol. 4, no. 152 (E-31)[634], 24th October 1980, page 134 E 31 & JP-A-55 104 159
- PATENT ABSTRACTS OF JAPAN, vol. 4, no. 148 (E-30)[630], 18th October 1980, page 98 E 30 & JP-A-55 99 864

## Description

The present invention relates to a signal transmission system and, more particularly, to a delay time compensation circuit for absorbing a difference between delay times of two signals, which are divisionally transmitted, using an elastic memory.

### Description of the Related Art

The frequency band of a television signal in an RAL system is 0 ∼ 5 MHz. When this signal is sampled by 13 MHz in accordance with a sampling theorem and is expressed by 8 bits per one sampling value, it becomes 104 Mbps.

Usually, this 104 Mbps signal is not sent in its original form, but 68 Mbps is used by a band compression such as DPCM, etc.

However, according to CCITT recommendation a bierarchy of the transmission path for transmitting this signal should be 2 MHz, 8 MHz, 34 MHz, and 140 MHz.

As seen from the above, the speed at which the 68 Mbps signal in its original form can be transmitted is only 140 MHz, and this is uneconomical because the whole transmission capacity is not used.

Therefore, the technique by which the 68 Mpps is divided into two signals and is transmitted as two 34 Mbps signals is considered in the present invention.

In terms of the capacity of the transmission path, a single high-speed signal must often be transmitted after being divided into a plurality of low-speed signals, and the low-speed signals must be mixed to obtain the original high-speed signal again at the reception side. In this case, in order to appropriately receive the two signals at the reception side, the propagation delay times of the two signals should be equal. In practice, however, a difference in propagation delay times occurs, due to various causes.

The major causes of the difference in propagation delay times include a difference between signal propagation times inherent to the transmission paths.

JP-A-58-36052 describes a parallel data transmission system in which at a transmitting data terminal station, high-speed data is inputted to a separating circuit for separating the input data, bit by bit into a plurality of parallel low-speed data. The core speed data is given synchronising signals by a frame appending circuit and are then transmitted to a receiving data terminal station through low-speed transmission lines. Frame detecting circuits connected to a synthesizing circuit are used to reconstitute the original high speed data.

US-A-3 306 978 describes the use of delay circuits to bring time slots of a received transmission into alignment with locally demarcated time slots.

### SUMMARY OF THE INVENTION

An object of the present invention is to provide an effective means for absorbing the difference in delay times which occurs in the transmission path.

The above-mentioned object can be achieved by a delay time adjusting method in which a transmitter device divides original data into a first data signal and a second data signal and sends said first data signal and said second data signal via different transmission paths to a receiving device, and said receiving device mixes said first data signal and said second data signal so as to reproduce said original data, characterized in that in said receiving device, said first data signal is written in first elastic memory and is operated in response to a clock of said first data signal, said second data signal is delayed and corresponding bits of said first elastic memory are sequentially read out in response to an output of a ring counter having the same number of bits as that of the first elastic memory and operated in response to a clock of the second signal, and to which the position of the first data signal in the first elastic memory is loaded in response to the delayed second data signal.

Further, the above-mentioned object can be achieved by providing a delay time adjusting circuit in a signal transmission system in which a high-speed data signal is divided into two low-speed data signals, the low-speed signals are transmitted through different transmission paths, and after a difference in delay times between the two signals is absorbed at a reception side, the low-speed signals are mixed again, characterzied in that first signal and first sync signal inputs connected to first and second elastic memories respectively for simultaneously writing a first signal and a first sync signal synchronous therewith into said first and second elastic memories respectively having the same bit length; a clock input connected to said first and second elastic memories, said first and second elastic memories being operated in response to a clock of the first signal input therethrough; a fixed delay circuit for delaying a second signal and a second sync signal synchronous therewith by the same time period; a counter having the same number of bits as that of said first and second elastic memories and operated in response to a clock of the second signal, whereby the position of the first sync signal in said second elastic memory is loaded, in response to the delayed second sync signal into said counter; and a data selector for reading out corresponding bits of said first elastic memory sequentially in response to the output from said counter, thereby obtaining a first signal output, from which the difference in the delay times with respect to the second signal is absorbed.

Still further, the above-mentioned object can be achieved by providing a delay time adjusting system in which the phases of first and second inputs of third multiplexed data having a phase difference of ±B bits, said first data input consisting of a bipolar signal, a first bipolar/unipolar converter for converting said bipolar signal into a unipolar signal, a first HDB3 decoder connected to said b/u converter for decoding a high density bipolar code and for outputting a 34 MHz clock signal as well as a 34-Mb/sec data signal, a first demultiplexer connected to said first HDB3 decoder for demultiplexing these signals and for outputting a first eight 4-Mb/sec data signals, a first 4 MHz clock signal, and a first frame signal, a fixed delay circuit connected to said first demultiplexer for delaying said eight data signals and said frame signal and for outputting a first data signal as output data DATA OUT1; said fixed delay circuit including nine D/8-bit delay circuits, a second bipolar/unipolar converter for converting a second data input, a second HDB3 decoder, and a second demultiplexer, for outputting a second eight 4-Mb/sec data signals, a second 4 MHz clock signal, and a second frame signal, a variable delay circuit including nine D/4-bit delay circuits for delaying the second eight data signals and said second frame signal, characterized in that said variable delay circuit is arranged to receive the second 4 MHz clock signal from said second demultiplexer as a write clock, the first 4 MHz clock signal from said first demultiplexer as a read clock, and the first frame signal passing through said fixed delay circuit as a delayed sync signal, and to output data DATA OUT2 which is phase-locked with the output data DATA OUT1.

Further feature and advantages of the present invention will be apparent from the ensuring description with reference to the accompanying drawings to which, however, the scope of the invention is in no way limited.

### BRIEF DESCRIPTION OF THE DRAWINGS

Figure 1 is a block diagram of a signal transmission system to which the circuit of the present invention is applied;
Fig. 2 is a timing chart showing the data which flows in the system shown in Fig. 1;
Fig. 3 is a timing chart explaining the principle of the present invention;
Fig. 4 is a block diagram of the circuit of the present invention;
Fig. 5 is a block diagram of one embodiment of the circuit according to the present invention;
Fig. 6 is a timing chart showing the respective signals in the embodiment shown in Fig. 5; and
Fig. 7 is a block diagram of a signal transmission system to which the circuit of the present invention is applied.

### DESCRIPTION OF THE PREFERRED EMBODIMENTS

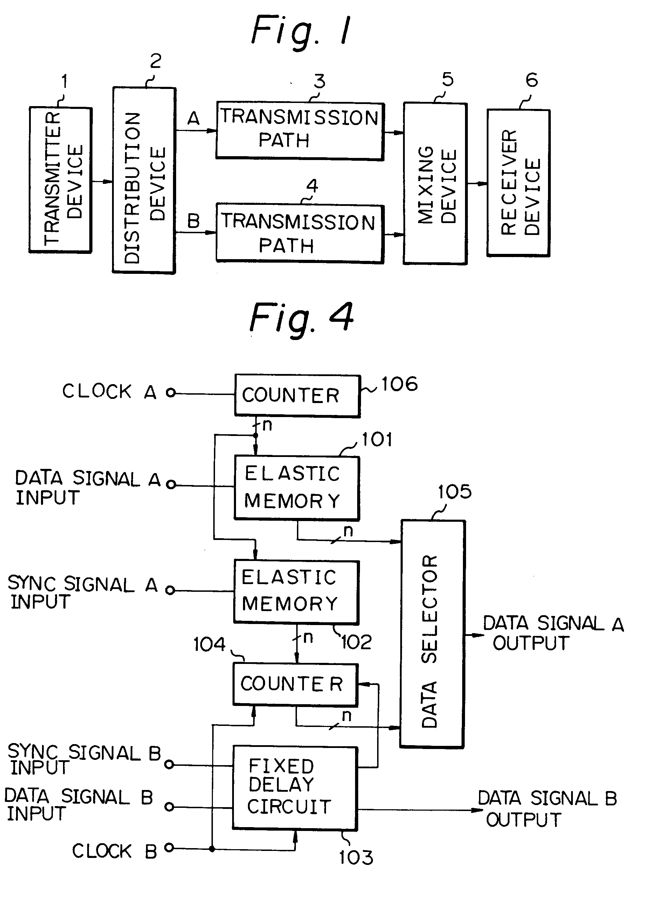

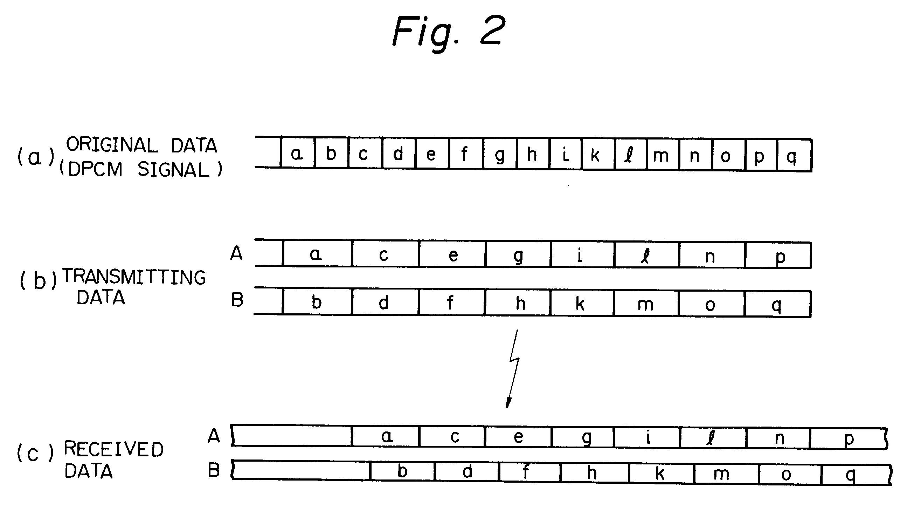

Figure 1 is a block diagram of a signal transmission system to which the circuit of the present invention is applied; and Fig. 2 is a timing chart showing the data which flows in the system shown in Fig. 1.

In Fig. 1, a transmitter device 1 modulates a PAL video signal to a DPCM (differential pulse code modulation) form to prepare a 68-Mb/sec signal, and the 68-Md/sec signal is divided into two low-speed signals A and B through a distribution device 2. The signals A and B are transmitted through transmission paths 3 and 4 having a transmission rate of 34.368 Mb/sec rated by the CCITT recommendation, and are mixed by a mixing device 5 to reproduce the 68-Mb/sec signal. The reproduced signal is then received by a receiver device 6.

In Fig. 2, (a) is an original data (DPCM signal), (b) is transmitted data having substantially the same phase and transmitted on the transmission lines A and B, and (c) is received data. In this case, a difference of propagation time occurs between the received data A and B.

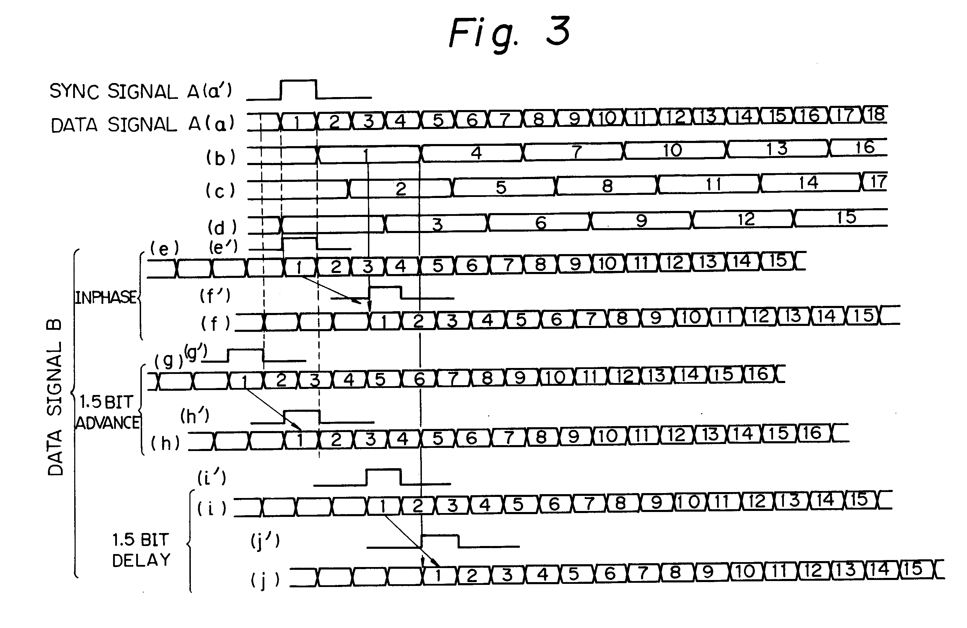

Figure 3 is a timing chart showing a principle of adjusting the difference of the propagation time between the data A and the data B mentioned above.

In Fig. 3, (a) shows a data signal A, (b), (c) and (d) are contents of elastic memories storing the content of the data, which is divided into three portions and delayed by one bit of data. In Fig. 3, (e), (g), (i) are the data signal B, wherein (e) is in phase with the data signal A, (g) is advanced to the data signal B by 1.5 bits, and (i) is delay from the data signal B by 1.5 bits. In the present invention, the data signal (e), (g) and (i) are delayed by the same bit as (f), (h), (j) in Fig. 3. As shown in Fig. 3, the delayed data (f), (h) and (i) are positioned in the range where the corresponding data are stored in the data (b), (c) and (d). For example, data "1" in the data signal B are positioned in the range of data "1" in the data signal (b) regardless of when the signal data B is advanced or delayed as shown in (h) or (j).

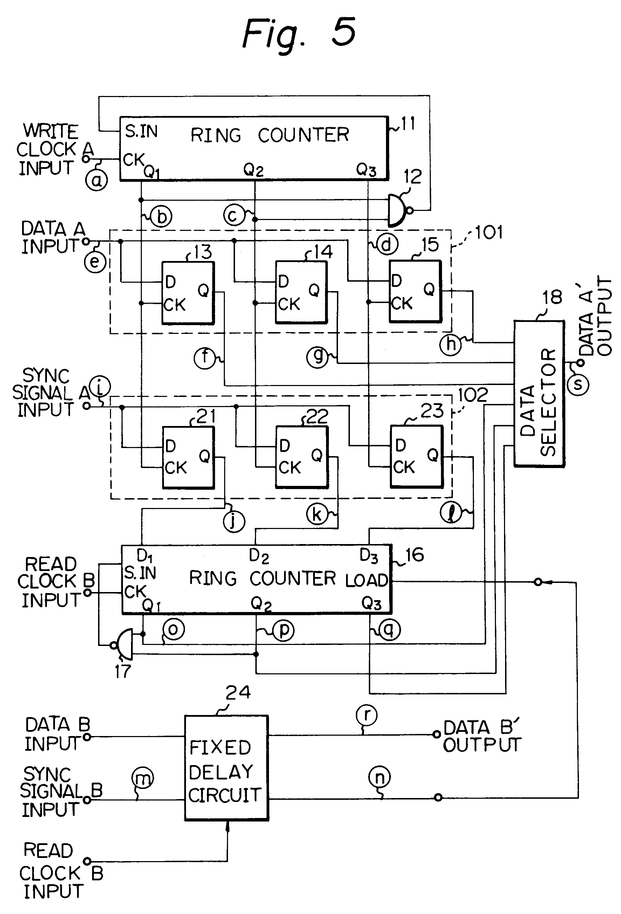

Figure 4 shows an arrangement based on the principle of the present invention.

Reference numerals 101 and 102 denote first and second elastic memories, respectively, and 106, a counter. The first and second elastic memories 101, 102 simultaneously receive a first data signal A (shown in Fig. 3 (a)) and a sync signal A (shown in Fig. 3 (a')) synchronous therewith, which have the same bit length, and are operated in response to an output from the counter 106 for counting clocks A synchronous with the data signal A. Then the data (b), (c), (d) shown in Fig. 3 are read out from the elastic memory 101.

Reference numeral 103 denotes a fixed delay circuit, which delays a second data signal B shown in (e), (g), (i) of Fig. 3 and a sync signal B (shown in Fig. 3 (e'), (g'), (i')) synchronous therewith by the same number of bits.

Reference numeral 104 denotes a counter, which has the same number of bits as that of the first and second elastic memories 101 and 102 and is operated in response to the clocks B synchronous with the second data signal B. In addition, the counter 104 loads the position of the first sync signal A shown in Fig. 3 (a') in the elastic memory 102 in response to the delayed second sync signal B (shown in Fig. 3 (f'), (h'), (j')).

Reference numeral 105 denotes a data selector for sequentially reading out the corresponding data signal A (shown in Fig. 3 (b), (c), (d)) from the first elastic memory 101 in response to the output from the counter 104.

Where it is assumed that the data signals A and B are received in phase, in advance phase (for example, 1.5 bit) or delayed phase (for example 1.5 bit).

The data signal A is divided by the elastic memory 101 into n (for example three) phase signals and accordingly, each phase signal becomes n bits (for example, 3 bits) in width.

At the same time, the data singal B and the sync signal B are delayed n/2 bit (in this example 1.5 bit) by the fixed delay circuit 103. (Fig. 3 (f), (h), (j))

Here, the data selector 105 reads, in order, the output of the elastic memory 101 in accordance with the clock from the counter 104, and the phase of the clock of the counter 104 coincides with the phase of the sync signal B, then the phase of the data signal A from the data selector 105 coincides with the phase of the data signal B from the fixed delay circuit 103.

Figure 5 shows one embodiment of the present invention, in Fig. 5, reference numeral 11 denotes a 3-bit ring counter; and 12, a NAND gate. Reference numerals '13, 14, and 15 denote flip-flops (to be referred to as F·Fs hereinafter), which constitute a 3-bit memory cell, that is, the elastic memory cell 101 shown in Fig. 4. Reference numeral 18 denotes a data selector corresponding to 105 in Fig. 4. Reference numerals 21, 22, and 23 denote flip-flops (to be referred to as F·Fs hereinafter), which constitute a 3-bit memory cell that is, the elastic memory cell 102 in Fig. 5. Reference numeral 24 (corresponds to 103 in Fig. 4) denotes a fixed delay circuit. Figure 5 exemplifies a case wherein one data input B of two data inputs A and B is constantly delayed by 1.5 bits by the fixed delay circuit 24, and the other data input A is variably delayed through a 3-bit elastic memory. The sync signals A and B are signals indicating the positions of the phases of the data inputs A and B at the transmission side.

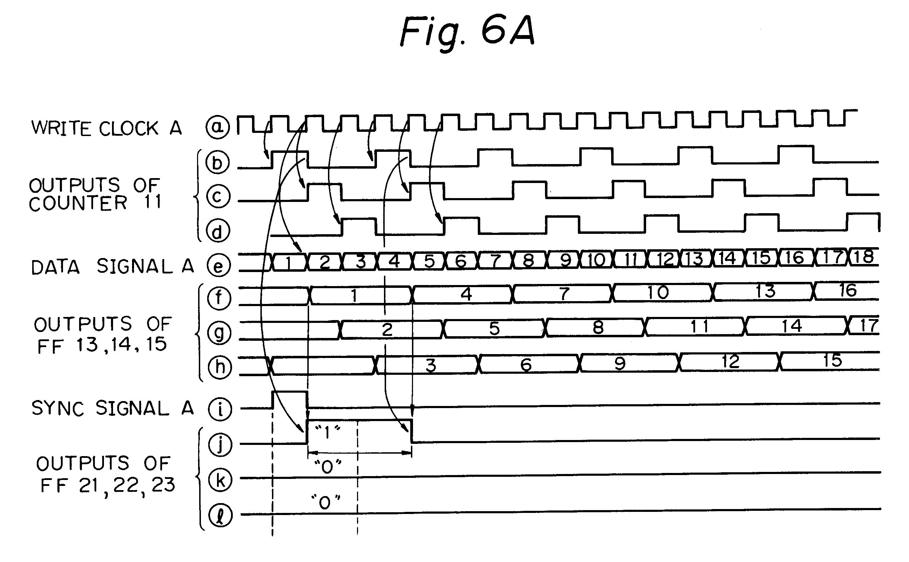

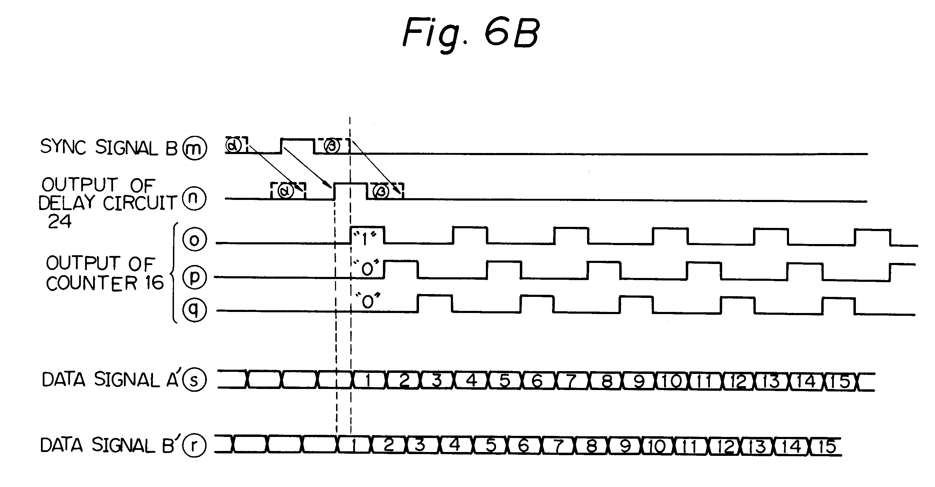

Figure 6 shows the respective signals in the embodiment shown in Fig. 5. In Fig. 6 ⓐ indicates a write clock A input; ⓑ, ⓒ, and ⓓ, Q₁ , Q₂ , and Q₃ outputs of the 3-bit ring counter 11, respectively; ⓔ, a data A input; ⓕ, ⓖ, and ⓗ, Q outputs of the F·F 13 the F·F 14, and the F·F 15, respectively; i , a sync signal B input; ⓙ, ⓚ, and 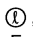 , Q outputs of the F·F 21, the F·F 22, and the F·F 23, respectively; ⓜ, a sync signal B input, ⓝ, an output of the fixed delay circuit 24, ⓞ, ⓟ, and ⓠ, Q₁ , Q₂ , and Q₃ outputs of the 3-bit ring counter 16, respectively; ⓡ,ⓐ data B' output of the fixed delay circuit 24, and s , a data A' output of the data selector 18.

The ring counter 11 generates three phase clock outputs ⓑ, ⓒ, and ⓓ which sequentially go to "1" level at every leading edge of the write clock A synchronous with the data A input indicated by ⓐ from the output terminals Q₁ , Q₂ , and Q₃ thereof. The F·F 13, and F·F 14, and F·F 15 constituting the memory cell respectively receive the parallel data A inputs (1, 2, 3, ...) indicated by ⓔ at their data terminals D and also receive the clocks ⓑ, ⓒ, and ⓓ at their clock terminals CK. The F·F 13, F·F 14, and F·F 15 retrieve the data A inputs in response to the trailing edges of the clocks ⓑ, ⓒ, and ⓓ, thus generating the outputs f (1, 4, ...), g (2, 5, ...) and h (3, 6, ...) from their Q outputs.

The F·F 21, F·F 22, and F·F 23 respectively receive the parallel sync signal A input indicated by ⓘ at their data terminals D and the clocks ⓑ, ⓒ, and ⓓ at their clock terminals CK, and retrieve the sync signal A in response to the leading edges thereof. The sync signal A is synchronous with a signal (1) in the data A input. The F·F 21 loads a "1" in response to the trailing edge of the clock ⓑ, and holds a "1" at its output ⓙ during a 3-bit interval until the clock ⓒ trails again. On the other hand, the outputs ⓚ and ⓛ are at "0" level.

The data B input and the sync signal B input indicated by ⓜ are delayed by 1.5 bits by the fixed delay circuit 24, thus producing the data B output and the sync signal output ⓝ. The 3-bit ring counter 16 receives the sync signal output ⓝ at its load terminal LOAD. When the signal ⓝ is at "1" level, the counter 16 loads the values of the outputs ⓙ, ⓚ, and 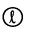 applied to its data terminals D₁ , D₂ , and D₃ in response to the leading edge of the read clock B input, thereby producing the outputs ⓞ, ⓟ, and ⓠ, respectively. In this case, the output ⓞ, is at "1" level, and the outputs ⓟ and ⓠ are at "0" level.

When the output ⓞ goes to "1" level, the data selector 18 selects and outputs the data ⓕ of the corresponding F·F 13, thereby producing data of (1) from the data A' output. The 3-bit ring counter 16 receives the read clock B input at its clock terminal CK, and generates the outputs ⓞ, ⓟ, and ⓠ from the terminals Q₁ , Q₂ , and Q₃ which subsequentially go to "1" level, respectively. In response to the outputs ⓞ, ⓟ, and ⓠ, the data selector 18 sequentially selects and outputs the data ⓕ, ⓖ, and ⓗ. Thus, data of (2), (3), (4), ... are sequentially selected and are output to the data A output indicated by ⓢ.

In this manner, the data A is phase-locked with the sync signal B (ⓝ) passing through the fixed delay circuit 24 and is output to the output ⓢ via the data selector 18, thereby adjusting the phase difference between the data A and B.

According to the embodiment shown in Fig. 5, when the data A input has the phase difference falling within the range of ±1.5 bits compared to the data B input, this difference can be adjusted to lock their phases. Referring to Fig. 6B, 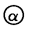 indicates a case wherein the date B input advances from the data A input by 1.5 bits, and 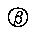 indicates a case wherein the data B input is delayed from the data B input by 1.5 bits. In this case, since the sync signal B (ⓝ) passing through the fixed delay circuit 24 also advances or is delayed by 1.5 bits, the data A output indicated by ⓢ also advances or is delayed by the same number of bits. Therefore, the phase adjustment with respect to the data A output can be similarly performed.

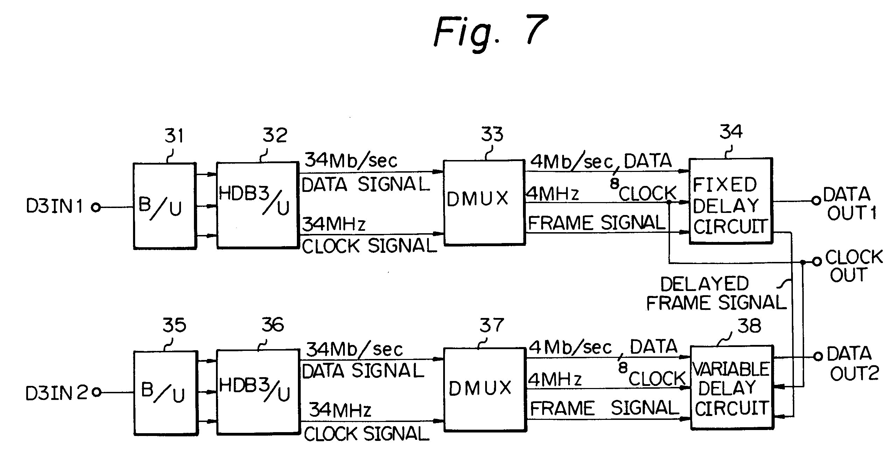

Figure 7 shows a practical application of the method of the present invention to an apparatus. Figure 7 exemplifies a case wherein the phases of inputs 1 and 2 of third multiplexed data D3, which have the phase difference of ±D bits, are adjusted. A first input D3 IN1 consisting of a bipolar signal is converted to a unipolar signal by a bipolar/unipolar converter (B/U) 31, and a high density bipolar (HDB3) code is decoded by an HDB3 decoder (HDB/3/U) 32, thus producing a 34 MHz clock signal as well as a 34-Mb/sec data signal. A demultiplexer (DMUX) 33 demultiplexes these signals and produces eight 4-Mb/sec data signals, a 4 MHz clock signal, and a frame signal. The eight data signals and the frame signal are delayed through nine D/8-bit delay circuits in a fixed delay circuit 34, and the data signal is output as output data DATA OUT1.

Meanwhile, a second data input D3 IN2 similarly passes through a bipolar/unipolar converter (B/U) 35, and HDB3 decoder (HDB3/U) 36, and a demultiplexer (DMUX) 37, thus producing eight 4-Mb/sec data signals, a 4 MHz clock signal, and a frame signal. The eight data signals and the frame signal are input to a variable delay circuit 38, and are delayed through nine D/4-bit delay circuits. The variable delay circuit 38 as the main feature of the present invention uses the 4 MHz clock signal from the DMUX 37 as a write clock, the 4 MHz clock signal from the DMUX 33 as a read clock, and the frame signal passing through the fixed delay circuit 34 as a delayed sync signal, and is operated in the same manner as in the embodiment shown in Fig. 5, thereby producing output data DATA OUT2 which is phase-locked with the output data DATA OUT1.

According to the signal transmission method of the present invention as described above, one signal is applied to an elastic memory to read out data therefrom and obtain an output in response to a ring counter output which is stepped by the number of bits corresponding to a difference between delay times of the sync signals of two signals, and the other signal is constantly delayed by a given number of bits. Therefore, even if one signal is either advanced or delayed from the other signal, any difference in the delay times can be absorbed.

## Claims

1. A delay time adjusting method in which a transmitter device (1) divides original data into a first data signal and a second data signal and sends said first data signal and said second data signal via different transmission paths (3,4) to a receiving device (6), and said receiving device (6) mixes said first data signal and said second data signal so as to reproduce said original data, characterized in that in said receiving device (6), said first data signal is written in first elastic memory (101) and is operated in response to a clock of said first data signal, said second data signal is delayed and corresponding bits of said first elastic memory (101) are sequentially read out in response to an output of a ring counter (104) having the same number of bits as that of the first elastic memory (101) and operated in response to a clock of the second signal, and to which the position of the first data signal in the first elastic memory (101) is loaded in response to the delayed second data signal.

2. A delay time adjusting circuit in a signal transmission system in which a high-speed data signal is divided into two low-speed data signals, the low-speed signals are transmitted through different transmission paths, and after a difference in delay times between the two signals is absorbed at a reception side, the low-speed signals are mixed again, characterzied in that
first signal and first sync signal inputs (A) connected to first and second elastic memories (101, 102) respectively for simultaneously writing a first signal and a first sync signal synchronous therewith into said first and second elastic memories (101, 102) respectively having the same bit length;
a clock input (A) connected to said first and second elastic memories (101, 102), said first and second elastic memories (101, 102) being operated in response to a clock of the first signal input therethrough;
a fixed delay circuit (103) for delaying a second signal and a second sync signal synchronous therewith by the same time period;
a counter (104) having the same number of bits as that of said first and second elastic memories (101, 102) and operated in response to a clock of the second signal, whereby the position of the first sync signal in said second elastic memory (102) is loaded, in response to the delayed second sync signal into said counter (104); and
a data selector (105) for reading out corresponding bits of said first elastic memory (101) sequentially in response to the output from said counter (104), thereby obtaining a first signal output, from which the difference in the delay times with respect to the second signal is absorbed.

3. A delay time adjusting system in which the phases of first and second inputs of third multiplexed data having a phase difference of ±B bits, said first data input consisting of a bipolar signal, a first bipolar/unipolar converter (31) for converting said bipolar signal into a unipolar signal, a first HDB3 decoder (32) connected to said b/u converter (31) for decoding a high density bipolar code and for outputting a 34 MHz clock signal as well as a 34-Mb/sec data signal, a first demultiplexer (33) connected to said first HDB3 decoder (32) for demultiplexing these signals and for outputting a first eight 4-Mb/sec data signals, a first 4 MHz clock signal, and a first frame signal, a fixed delay circuit (34) connected to said first demultiplexer (33) for delaying said eight data signals and said frame signal and for outputting a first data signal as output data DATA OUT1; said fixed delay circuit (34) including nine D/8-bit delay circuits, a second bipolar/unipolar converter (35) for converting a second data input, a second HDB3 decoder (36), and a second demultiplexer (37), for outputting a second eight 4-Mb/sec data signals, a second 4 MHz clock signal, and a second frame signal, a variable delay circuit (38) including nine D/4-bit delay circuits for delaying the second eight data signals and said second frame signal, characterized in that said variable delay circuit (38) is arranged to receive the second 4 MHz clock signal from said second demultiplexer (37) as a write clock, the first 4 MHz clock signal from said first demultiplexer (33) as a read clock, and the first frame signal passing through said fixed delay circuit (34) as a delayed sync signal, and to output data DATA OUT2 which is phase-locked with the output data DATA OUT1.

## Patentansprüche

1. Verzögerungszeit-Anpassungsverfahren, bei dem ein Übertragungsgerät (1) ursprüngliche Daten in ein erstes Datensignal und ein zweites Datensignal unterteilt und das erste Datensignal und das zweite Datensignal über verschiedene Übertragungspfade (3, 4) an ein Empfangsgerät (6) überträgt, und das Empfangsgerät (6) das erste Datensignal und das zweite Datensignal so mischt, um die ursprünglichen Daten zu reproduzieren, dadurch gekennzeichnet, daß in dem Empfangsgerät (6) das erste Datensignal in einen ersten elastischen Speicher (101) geschrieben wird und in Ansprechen auf einen Takt des ersten Signals betrieben wird, das zweite Datensignal verzögert wird und entsprechende Bits des ersten elastischen Speichers (101) in Ansprechen auf einen Ausgang eines Ringzählers (104) mit der gleichen Anzahl von Bits wie diejenige des ersten elastischen Speichers (101) nacheinander ausgelesen werden und in Ansprechen auf einen Takt des zweiten Signals betrieben werden, und zu dem die Position des ersten Datensignals in dem ersten elastischen Speicher (101) in Ansprechen auf das verzögerte zweite Datensignal geladen wird.

2. Verzögerungszeit-Anpassungsschaltung in einem Datenübertragungssystem, bei dem ein Datensignal mit hoher Geschwindigkeit in zwei Datensignale mit niedriger Geschwindigkeit aufgeteilt wird, die Signale mit niedriger Geschwindigkeit durch verschiedene Übertragungspfade übertragen werden und nachdem eine Differenz in Verzögerungszeiten zwischen den zwei Signalen auf eine Empfängerseite absorbiert ist, die Signale mit niedriger Geschwindigkeit erneut gemischt werden, dadurch gekennzeichnet, daß
Eingänge (A) eines ersten Signals und eines ersten Sync-Signals, die mit ersten bzw. zweiten elastischen Speichern (101, 102) verbunden sind, um gleichzeitig ein erstes Signal und ein dazu synchrones erstes Sync-Signal in den ersten bzw. zweiten elastischen Speicher (101, 102) zu schreiben, die gleiche Bitlänge aufweisen;
ein Takteingang A vorgesehen ist, der mit den ersten und zweiten elastischen Speichern (101, 102) verbunden ist, wobei die ersten und zweiten elastischen Speicher (101, 102) im Ansprechen auf einen Takt des dadurch eingegebenen ersten Signals betrieben werden;
eine Schaltung (103) mit fester Verzögerung vorgesehen ist, zum Verzögern eines zweiten Signals und eines dazu synchronen zweiten Sync-Signals um die gleiche Zeitperiode;
ein Zähler (104) vorgesehen ist, der die Anzahl von Bits wie diejenige der ersten und zweiten elastischen Speicher (101, 102) aufweist und in Ansprechen auf einen Takt des zweiten Signals betrieben wird, wobei die Position des ersten Sync-Signals in dem zweiten elastischen Speicher (102) in den Zähler (104) in Ansprechen auf das verzögerte zweite Sync-Signal geladen wird; und
eine Daten-Wähleinrichtung (105) vorgesehen ist zum Auslesen entsprechender Bits des ersten elastischen Speichers (101) nacheinander in Ansprechen auf den Ausgang von dem ersten Zahler (104), wodurch ein erster Signalausgang erhalten wird, aus dem die Differenz der Verzögerungszeiten bezüglich des zweiten Signals absorbiert ist.

3. Verzögerungszeit-Anpassungssystem, bei dem die Phasen von ersten und zweiten Eingängen von dritten Multiplexdaten eine Phasendifferenz von ± B Bits aufweisen, der erste Dateneingang aus einem Bipolarsignal besteht, ein erster Bipolar/Unipolar-Wandler (31) vorgesehen ist zum Umwandeln des Bipolarsignals in ein Unipolarsignal, ein erster HDB3-Dekoder (32) vorgesehen ist, der mit dem b/u-Wandler (31) verbunden ist zum Dekodieren eines Bipolarcodes mit hoher Dichte und zum Ausgeben eines 34 MHz-Taktsignals sowie eines 34-Mb/sek. Datensignals, ein erster Demultiplexer (33) vorgesehen ist, der mit dem ersten HDB3-Dekoder (32) verbunden ist zum Demultiplexen dieser Signale und zum Ausgeben von ersten acht 4-Mb/sek. Datensignalen, eines ersten 4 MHz Taktsignals und eines ersten Rahmensignals, eine Schaltung (34) mit fester Verzögerung vorgesehen ist, die mit dem ersten Demultiplexer (33) verbunden ist, zum Verzögern der acht Datensignale und des Rahmensignals und zum Ausgeben eines ersten Datensignals als Ausgangsdaten DATA OUT1; wobei die Schaltung (34) mit fester Verzögerung neun D/8-Bit Verzögerungsschaltungen, einen zweiten Bipolar/Unipolar-Wandler (35) zum Umwandeln eines zweiten Dateneingangs, einen HDB3-Dekoder (36) und einen zweiten Demultiplexer (37) einschließt, zum Ausgeben von zweiten acht 4-Mb/sek. Datensignalen, eines zweiten 4MHz Taktsignals und eines zweiten Rahmensignals, eine Schaltung (38) mit variabler Verzögerung neun D/4 Bit Verzögerungsschaltungen zum Verzögern der zweiten acht Datensignale und des zweiten Rahmensignals einschließt, dadurch gekennzeichnet, daß die Schaltung (38) mit variabler Verzögerung angeordnet ist, um das zweite 4 MHz Taktsignal von dem zweiten Demultiplexer (37) als einen Schreibtakt, das erste 4 MHz Taktsignal von dem ersten Demultiplexer (33) als einen Lesetakt und das durch die Schaltung (34) mit fester Verzögerung laufende erste Rahmensignal als ein verzögertes Sync-Signal zu empfangen, und um Daten DATA OUT2 auszugeben, die zu den Ausgangsdaten DATA OUT1 phasenstarr sind.

## Revendications

1. Procédé de compensation du temps de retard selon lequel un dispositif émetteur (1) divise des données initiales en un premier signal de données et en un second signal de données et envoie ledit premier signal de données et ledit second signal de données, via différents circuits de transmission (3, 4), vers un dispositif de réception (6), ledit dispositif de réception (6) mixant ledit premier signal de données et ledit second signal de données de façon à reproduire lesdites données initiales,
procédé caractérisé en ce que, dans ledit dispositif récepteur (6), ledit premier signal de données est écrit dans une première mémoire élastique (101) qui est activée en réponse à une base de temps dudit premier signal de données; ledit second signal de données est retardé et des bits correspondants de ladite première mémoire élastique (101) sont extraits, de façon séquentielle, en réponse à une sortie d'un compteur cyclique (104) possédant le même nombre de bits que celle de la première mémoire élastique (101) et activé en réponse à une base de temps du second signal et auquel la position du premier signal de données dans la première mémoire élastique (101) est fournie en réponse au second signal de données retardé.

2. Circuit de compensation du temps de retard dans un dispositif de transmission de signaux dans lequel un signal de données à grande vitesse est divisé en deux signaux de données à basse vitesse; les signaux à basse vitesse sont transmis via différents circuits de transmission et après qu'une différence de temps de retard entre les deux signaux ait été compensée du côté récepteur, les signaux à basse vitesse sont à nouveau mixés,
circuit caractérisé par :
- des entrées (A) du premier signal et du premier signal de synchronisation, respectivement raccordées à des première et seconde mémoires élastiques (101, 102), pour une écriture simultanée d'un premier signal et d'un premier signal de synchronisation, tous deux synchrones, dans lesdites première et seconde mémoires élastiques (101, 102) possédant respectivement le même nombre de bits;
- une entrée d'horloge (A) raccordée auxdites première et seconde mémoires élastiques (101, 102), lesdites première et seconde mémoires élastiques (101, 102) étant activées en réponse à une base de temps de l'entrée du premier signal;
- un circuit de temporisation fixée (103) pour retarder un second signal et un second signal de synchronisation, tous deux synchrones, de la même période de temps;
- un compteur (104) possédant le même nombre de bits que celui desdites première et seconde mémoires élastiques (101, 102) et actionné en réponse à une base de temps du second signal, la position du premier signal de synchronisation dans ladite seconde mémoire élastique (102) étant ainsi chargée en réponse au second signal de synchronisation retardé dans ledit compteur (104); et
- un sélecteur de données (105) pour extraire des bits correspondants de ladite première mémoire élastique (101), de façon séquentielle, en réponse à la sortie dudit compteur (104), obtenant ainsi une sortie de premier signal à partir de laquelle la différence de temps de retard par rapport au second signal est compensée.

3. Système de compensation du temps de retard dans lequel les phases de première et seconde entrées de troisièmes données multiplexées présentent une différence de phase de ±B bits, ladite première entrée de données consistant en un signal bipolaire et comprenant un premier convertisseur bipolaire/unipolaire (31) pour la conversion dudit signal bipolaire en un signal unipolaire, un premier décodeur HDB3 (32) raccordé audit convertisseur b/u (31) pour le décodage d'un code bipolaire à haute densité et pour la génération d'un signal d'horloge de 34 MHz aussi bien que d'un signal de données de 34 Mb/sec, un premier démultiplexeur (33) raccordé audit premier décodeur HDB3 (32) pour démultiplexer ces signaux et pour générer huit premiers signaux de données de 4 Mb/sec, un premier signal d'horloge de 4 MHz et un premier signal de séquence, un circuit de temporisation fixée (34) raccordé audit premier démultiplexeur (33) pour retarder lesdits huit signaux de données et ledit signal de séquence et pour générer un premier signal de données en tant que données de sortie DATA OUT1, ledit circuit de temporisation fixée (34) comprenant neuf circuits de temporisation de 8 bits, un second convertisseur bipolaire/unipolaire (35) pour convertir une seconde entrée de données, un second décodeur HDB3 (36) et un second démultiplexeur (37) pour générer huit seconds signaux de données de 4 Mb/sec, un second signal d'horloge de 4 MHz et un second signal de séquence, un circuit de temporisation variable (38) comprenant neuf circuits de temporisation de 4 bits pour retarder les huit seconds signaux de données et ledit second signal de séquence,
système caractérisé en ce que ledit circuit de temporisation variable (38) est agencé pour recevoir le second signal d'horloge de 4 MHz dudit second multiplexeur (37) en tant que base de temps d'écriture, le premier signal d'horloge de 4 MHz dudit premier multiplexeur (33) en tant que base de temps de lecture et le premier signal de séquence traversant ledit circuit de temporisation fixée (34) en tant que signal de synchronisation retardé et pour générer des données DATA OUT2 qui sont verrouillées en phase avec les données de sortie DATA OUT1.
